# EUROPÄISCHE PATENTSCHRIFT

(11) **EP 2 886 806 B1**
(45) Veröffentlichungstag und Bekanntmachung des Hinweises auf die Patenterteilung: **21.09.2016**
(21) Anmeldenummer: 14197570.6
(22) Anmeldetag: 12.12.2014
(51) Int. Cl.: F01D 19/02, F01D 25/10, F01D 25/14

(54) **Strömungsmaschine**
Turbomachine
Turbomachine

(30) Priorität: 19.12.2013 DE 102013226742
(43) Veröffentlichungstag der Anmeldung: 24.06.2015
(73) Patentinhaber: Mahle International GmbH, 70376 Stuttgart (DE)
(72) Erfinder: EWERT, Sebastian, 70180 Stuttgart (DE); MÜLLER, Rolf, 71711 Steinheim/Murr (DE); OECHSLEN, Holger, 70184 Stuttgart (DE); WIESKE, Dr., Peter, 70825 Korntal-Münchingen (DE)
(74) Vertreter: BRP Renaud & Partner mbB Rechtsanwälte Patentanwälte Steuerberater

(56) Entgegenhaltungen:
- EP-A1- 2 565 419
- EP-A2- 1 939 427
- CH-A- 429 767
- DE-A1-102007 016 557
- GB-A- 301 298
- GB-A- 813 330
- US-A- 1 541 834
- US-A1- 2013 283 790

## Beschreibung

Die vorliegende Erfindung betrifft eine Strömungsmaschine, welche als Turbine ausgeführt ist, gemäß dem Oberbegriff des Anspruchs 1.

Grundsätzlich erfolgt bei einer Strömungsmaschine ein Energieübertrag zwischen einem strömenden Fluid, beispielsweise gesättigtem Dampf, und der Strömungsmaschine selbst. Der Energieübertrag erfolgt bei einer als Turbine ausgebildeten Strömungsmaschine beispielsweise mittels Leitschaufeln, die derart profiliert sind, dass durch deren Umströmung eine Druckdifferenz zwischen Vorder- und Rückseite entsteht und dadurch die Rotation der Leitschaufeln bewirkt wird. Turbinen bestehen in der Regel aus einem drehenden Teil, dem sogenannten Rotor, sowie einem ortsfesten Teil, dem sogenannten Stator. In letzterem erfolgt die Zuführung des Arbeitsmediums zum Rotor sowie eine eventuell erforderliche Zustandsänderung des Arbeitsmediums bevor dieses über den Rotor geführt wird. Das Arbeitsmedium gibt einen Großteil seiner Energie an den Rotor ab, von welchem aus die Energie über eine Welle ausgeleitet wird. Die Hinführung des Arbeitsmediums zum Stator übernimmt dabei in der Regel das Gehäuse der Strömungsmaschine, ebenso wie die Abführung des Arbeitsmediums vom Rotor aus der Strömungsmaschine.

In manchen Betriebszuständen ist es gewünscht, dass die Strömungsmaschine, beispielsweise eine Turbine, nicht mit Arbeitsmedium beaufschlagt oder mit einem geringeren Massenstrom als dem zur Verfügung gestellten beaufschlagt werden soll. Um dies zu erreichen, sind aus dem Stand der Technik sogenannte Bypasskanäle bekannt, welche die Turbine der Strömungsmaschine umgehen und stromauf der Turbine aus einem Zuführkanal abzweigen und stromab der Turbine wieder in diesen münden. Derartige Strömungsmaschinen werden auch in Verbindung mit Brennkraftmaschinen in Kraftfahrzeugen, beispielsweise zur Stromerzeugung verwendet, wobei sie in diesem Fall in einen sogenannten RankineKreislauf eingebunden sind, bei welchem ein Arbeitsmedium, wie z.B. Wasser, Ethanol oder ein anderes organisches Medium bzw. Gemisch von verschiedenen Medien, in flüssigen und dampfförmigen Aggregatszuständen verwendet wird. Aus der DE 10 2007 016 557 A1 ist beispielsweise ein Verfahren zur Nutzung von Abwärme aus einer Brennkraftmaschine zur Erzeugung von elektrischem Strom unter Verwendung eines derartigen Rankine-Kreislaufes bekannt. Hierbei erfolgt zunächst ein Antreiben des Arbeitsmediums zu einer Kreislaufströmung, wobei gleichzeitig aus einem Abgasstrom der Brennkraftmaschine Wärme an das Arbeitsmedium übertragen wird. Der Wärmeübertrag bewirkt dabei ein Verdampfen des Arbeitsmediums, wobei der gesättigte Dampf, das heißt das gesättigte dampfförmige Arbeitsmedium anschließend der Expansionsmaschine, das heißt der

Turbine, zugeleitet wird. In der Expansionsmaschine wird das Arbeitsmedium unter Abgabe von Energie aus seinem überhitzten Zustand entspannt und wechselt anschließend in einem Kondensator in einen flüssigen Aggregatszustand. In flüssiger Form wird es anschließend von einer in den Rankine-Kreislauf eingebundenen Pumpe wiederum auf ein höheres Druckniveau gefördert und in dem in den Abgasstrom eingebundenen Abgaswärmetauscher verdampft.

Aus der US 1,541,834 A ist eine Strömungsmaschine mit einer in einem Gehäuse angeordneten Axialturbine bekannt, die mit einem heißen Arbeitsmedium, das heißt konkret mit Dampf, beaufschlagbar ist. Darüber hinaus ist ein vollständig innerhalb des Gehäuses verlaufender Kanal zum Aufheizen desselben durch das Arbeitsmedium vorgesehen.

Aus der US 2013/0283790 A1 ist ebenfalls eine Strömungsmaschine mit einer in einem Gehäuse angeordneten Turbine bekannt, die mit heißem Arbeitsmedium über den Kreislauf beaufschlagbar ist. Ebenfalls vorgesehen ist ein die Turbine umgehender Bypasskanal.

Nachteilig bei dem aus dem Stand der Technik bekannten Verfahren ist jedoch, dass insbesondere während einer Startphase nicht unbedingt verhindert werden kann, dass das Arbeitsmedium in noch flüssiger Form in die Turbine gelangt und dort zu Schädigungen, beispielsweise durch Erosion aufgrund von Tropfenschlag führt.

Die vorliegende Erfindung beschäftigt sich daher mit dem Problem, für eine Strömungsmaschine der gattungsgemäßen Art eine verbesserte Ausführungsform anzugeben, die insbesondere den aus dem Stand der Technik bekannten Nachteil überwindet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer an sich bekannten gattungsgemäßen Strömungsmaschine mit einer in einem Gehäuse angeordneten Turbine zugleich auch zumindest einen, vollständig innerhalb des Gehäuses verlaufenden und die Turbine umgehenden Bypasskanal vorzusehen, welcher insbesondere während einer Startphase der Strömungsmaschine solange mit Arbeitsmedium beaufschlagt wird, bis dieses den gewünschten und für ein schädigungsfreies Betreiben der Turbine erforderlichen überhitzten Zustand erreicht hat und dann über die Turbine geführt werden kann. Besonders beim Anfahren der Strömungsmaschine kann ein zu geringes Wärmeangebot zu einer unzureichenden Erhitzung des Arbeitsmediums führen, so dass dieses beispielsweise beim Eintritt in den Stator nicht als gesättigter Dampf vorliegt und dadurch eine Erosion aufgrund von Tropfenschlag herbeiführen kann. Dies wird durch den erfindungsgemäß innerhalb des Gehäuses verlaufenden Bypasskanal zuverlässig verhindert, da das Arbeitsmedium nunmehr solange an der Turbine vorbeigeführt werden kann, bis es seinen gesättigten, überhitzten Zustand erreicht hat. Durch die vollständige erfindungsgemäße Anordnung des zumindest einen Bypasskanals innerhalb des Gehäuses wird dieses während der Startphase der Strömungsmaschine durch den durch den zumindest einen Bypasskanal geleiteten Dampf erhitzt, wodurch die Strömungsmaschine insgesamt schneller betriebsbereit ist. Durch das schnelle Aufheizen des Gehäuses und damit auch des Stators der Strömungsmaschine wird die Betriebstemperatur, die oberhalb der Kondensationstemperatur des Arbeitsmediums liegt, schneller erreicht, als wenn der Bypasskanal, wie dies beim bisherigen Stand der Technik stets vorgesehen ist, vom Gehäuse entkoppelt ist. Sobald die Gehäusetemperatur höher ist als die Kondensationstemperatur, verdampft das bislang in der Turbine verbliebene flüssige Arbeitsmedium, wobei durch dieses aktive Verdampfen im Turbinenraum zuverlässig verhindert werden kann, dass beim Anfahren der Turbine flüssiges Arbeitsmedium im Bereich des Rotors vertrieben ist und dadurch die Turbine schädigen kann. Die erfindungsgemäße Strömungsmaschine mit dem vollständig innerhalb des Gehäuses angeordneten Bypasskanal schlägt somit zwei Fliegen mit einer Klappe, nämlich einerseits das Verhindern von Schäden in der Turbine aufgrund von Tropfenschlagerosion und andererseits das schnellere Erreichen der Betriebstemperatur.

Zweckmäßig sind in dem Bypasskanal Wärmeübertragungselemente, insbesondere Rippen, zum verbesserten Wärmeübertrag an das Gehäuse angeordnet. Derartige Wärmeübertragungselemente erhöhen die Oberfläche innerhalb des Bypasskanals und sorgen damit für einen erhöhten Wärmeübertrag vom Arbeitsmedium auf das Gehäuse bzw. den Stator der Strömungsmaschine, wodurch diese schneller ihre Betriebstemperatur erreicht. Derartige Wärmeübertragungselemente können selbstverständlich in nahezu beliebiger Form und Gestalt innerhalb des zumindest einen Bypasskanals angeordnet werden.

Bei einer weiteren vorteilhaften Ausführungsform der erfindungsgemäßen Lösung sind mehrere im Wesentlichen parallel verlaufende Bypasskanäle innerhalb des Gehäuses angeordnet. Hierdurch kann das Gehäuse gleichmäßig und insbesondere deutlich schneller aufgeheizt werden, wodurch nicht nur eine homogenere Erwärmung, sondern zudem auch ein Verdampfen des flüssigen Arbeitsmediums in der Strömungsmaschine an gleichzeitig vielerlei Stellen erzielt werden kann. Hierbei ist denkbar, dass sich der zumindest eine Bypasskanal nach der Abzweigung aus einem Zuführkanal fächerförmig aufteilt oder aber das mehrere Bypasskanäle, die zudem beispielsweise jeweils mittels einer Ventileinrichtung individuell schaltbar sind, zum Aufheizen des Gehäuses der Strömungsmaschine mit heißem Arbeitsmedium beaufschlagbar sind.

Die vorliegende Erfindung beruht weiter auf dem allgemeinen Gedanken, bei einer Brennkraftmaschine mit einem Rankine-Kreislauf eine zuvor erwähnte Strömungsmaschine zu verwenden und in diesen Rankine-Kreislauf einzubinden. In dem Rankine-Kreislauf sind zudem ein in einen Abgasstrom der Brennkraftmaschine eingebundener Abgaswärmetauscher (Verdampfer), ein Kondensator, ein Reservoir sowie eine Pumpe angeordnet. Durch die Verwendung der erfindungsgemäßen Strömungsmaschine mit dem zumindest einen innerhalb des Gehäuses der Turbine bzw. der Strömungsmaschine angeordneten Bypasskanal können Erosionsschäden an der Turbine verhindert und dadurch deren Lebensdauer gesteigert werden. Zudem ist auch ein schnelleres Erreichen der Betriebstemperatur der Strömungsmaschine aufgrund der zuvor beschriebenen Sachverhalte möglich. Erfolgt bei der erfindungsgemäßen Brennkraftmaschine ein Umschalten zwischen dem Bypassmodus, in welchem das Arbeitsmedium über den zumindest einen Bypasskanal geleitet wird und dem Betriebsmodus, in welchem das Arbeitsmedium durch die Turbine geleitet wird, hat dies nur geringe Rückwirkung auf den Kreislauf, sofern Bypasskanal und Turbine dieselbe Eigenschaften besitzen. Hierdurch ist es möglich, die Druckwechselbelastung für sämtliche Komponenten, insbesondere für den Abgaswärmetauscher zu reduzieren. Da derartige Druckwechselbelastungen häufig ursächlich für das mechanische Versagen von Wärmeübertragern bzw. Abgaswärmetauschern sind, kann auch hierdurch ein gravierender Vorteil erzielt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße Strömungsmaschine,
- Fig. 2: eine in einen Rankine-Kreislauf einer Brennkraftmaschine eingebettete, erfindungsgemäße Strömungsmaschine.

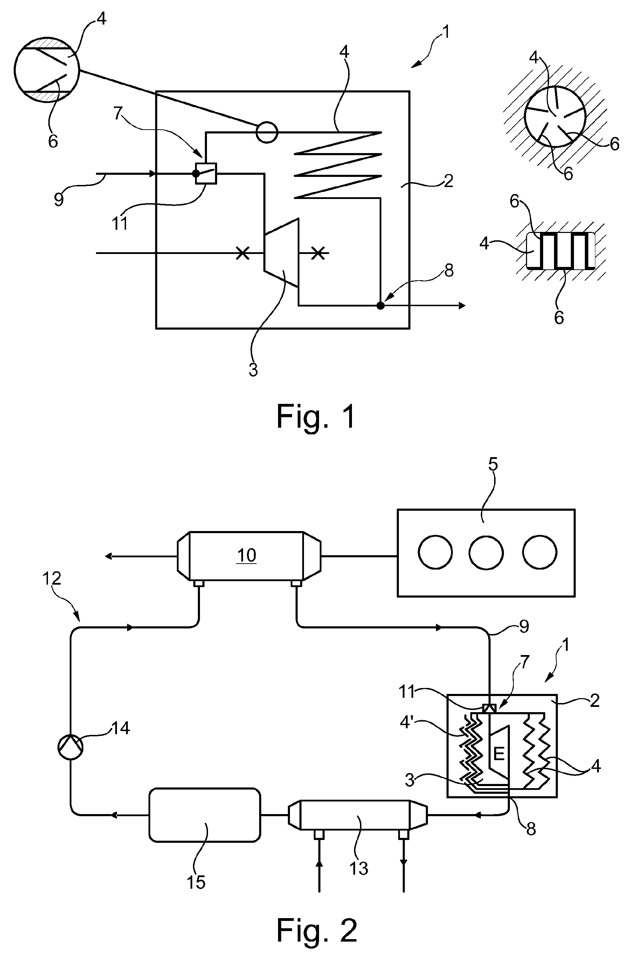

Entsprechend der Fig. 1, weist eine erfindungsgemäße Strömungsmaschine 1 eine in einem Gehäuse 2 angeordnete Turbine 3 auf, die mit heißem Arbeitsmedium beaufschlagbar ist. Erfindungsgemäß ist nun zumindest ein vollständig innerhalb des Gehäuses 2 verlaufender und die Turbine 3 umgehender Bypasskanal 4 zum Aufheizen des Gehäuses 2 bzw. der Turbine 3 durch das Arbeitsmedium vorgesehen. Hierdurch ist es möglich, während einer Startphase einer Brennkraftmaschine 5 (vgl. Fig. 2), in welcher noch keine ausreichende Wärmemenge auf das Arbeitsmedium des Rankine-Kreislaufs übertragen wurde, das Arbeitsmedium zunächst an der Turbine 3 vorbei und durch den Bypasskanal 4 zuleiten, welcher dazu beiträgt, dass das Gehäuse 2 der Strömungsmaschine 1 schneller und damit die Turbine 3 indirekt aufgeheizt werden, so dass insbesondere noch im Bereich der Turbine 3 befindliches flüssiges Arbeitsmedium verdampft, bevor diese eigentlich mit gesättigtem Dampf beaufschlagt wird. Hierdurch kann insbesondere eine sogenannte Tropfenschlagerosion, welche zu einer Beschädigung der Turbine 3 und insbesondere der dort angeordneten Laufschaufeln führen kann, verhindert werden. Durch das schnellere Aufheizen des Gehäuses 2 kann die Strömungsmaschine 1 insgesamt schneller auf ihre Betriebstemperatur, das heißt auf eine Temperatur die oberhalb der Kondensationstemperatur des Arbeitsmediums liegt, gebracht werden.

Zur besseren Wärmeübertragung vom Bypasskanal 4 auf das Gehäuse 2 können in dem Bypasskanal 4 Wärmeübertragungselement 6 vorgesehen sein, die beispielsweise in der Art von Rippen (vgl. rechte untere Querschnittsdarstellung in Fig. 1) ausgebildet sind. Auch ein Querschnitt des Bypasskanals 4 ist individuell wählbar, so dass dieser beispielsweise einen runden oder einen eckigen Querschnitt aufweisen kann. Selbstverständlich ist auch denkbar, dass mehrere im Wesentlichen parallel verlaufende Bypasskanäle 4 innerhalb des Gehäuses 2 angeordnet sind, wie dies beispielsweise bei der Strömungsmaschine 1 gemäß der Fig. 2 dargestellt ist.

Optional kann auch zumindest ein separater und wärmeisolierter Bypasskanal 4' vorgesehen sein, der zwar ebenfalls die Turbine 3 umgeht, jedoch nicht oder nur marginal wärmeübertragend mit dem Gehäuse 2 verbunden ist. Der Bypasskanal 4' muss auch nicht vollständig innerhalb des Gehäuses 2 verlaufen. Die Strömungsmaschine 1 kann beispielsweise als Axialimpulsturbine ausgebildet sein. Betrachtet man nochmals den Bypasskanal 4 gemäß den Fig. 1 und 2, so kann man erkennen, dass dieser eingangsseitig an einer ersten Koppelstelle 7 und ausgangsseitig an einer zweiten Koppelstelle 8 mit einer Leitung 9 gekoppelt ist, wobei beide Koppelstellen 7, 8 innerhalb des Gehäuses 2 angeordnet sind. Alternativ können diese Koppelstellen 7, 8 auch außerhalb des Gehäuses 2 realisiert werden. In der Leitung 9 strömt das von einem Abgaswärmetauscher 10 (vgl. Fig. 2) oder generell einem Verdampfer erhitzte Arbeitsmedium zur Strömungsmaschine 1 bzw. wieder von dieser weg. An der ersten Koppelstelle 7 ist dabei eine Ventileinrichtung 11 angeordnet, die stellungsabhängig einen Arbeitsmediumstrom auf die Turbine 3 und/oder den wenigstens einen Bypasskanal 4 aufteilt, wobei die Ventileinrichtung 11 ebenfalls innerhalb des Gehäuses 2 angeordnet ist. Selbstverständlich ist mit der Ventileinrichtung 11 auch ein vollständiges Umleiten des Arbeitsmediumstroms auf den Bypasskanal 4' möglich, welcher separat zu den anderen Bypasskanälen 4 angeordnet und nicht wärmeübertragend mit dem Gehäuse 2 der Strömungsmaschine 1 verbunden ist.

Betrachtet man die Fig. 2, so ist dort eine Brennkraftmaschine 5 mit einem Rankine-Kreislauf 12 zu erkennen, in welchem die zuvor beschriebene Strömungsmaschine 1, beispielsweise zur Stromerzeugung, angeordnet ist. In dem RankineKreislauf 12 befindet sich zusätzlich der mit einem Abgasstrom der Brennkraftmaschine 5 wärmeübertragend verbundene Abgaswärmetauscher 10, ein Kondensator 13 für das Arbeitsmedium sowie eine Pumpe 14. Ebenfalls vorgesehen sein kann zusätzlich ein Reservoir 15 für das Arbeitsmedium.

Mit der erfindungsgemäßen Strömungsmaschine 1 kann nicht nur die Lebensdauer einer Turbine 3 deutlich erhöht werden, da eine Erosion aufgrund ungenügend erhitztem Arbeitsmedium nicht mehr zu befürchten ist, sondern die Strömungsmaschine 1 kann auch schneller genutzt werden, da über den zumindest einen, vollständig innerhalb des Gehäuses 2 angeordneten Bypasskanal 4 eine rasche Aufheizung des Gehäuses 2 und der Turbine 3 möglich ist.

## Patentansprüche

1. Strömungsmaschine (1) mit einer in einem Gehäuse (2) angeordneten Turbine (3), die mit einem heißen Arbeitsmedium beaufschlagbar ist,
**dadurch gekennzeichnet,**
**dass** zumindest ein vollständig innerhalb des Gehäuses (2) verlaufender und die Turbine (3) umgehender Bypasskanal (4) zum Aufheizen des Gehäuses (2) durch das Arbeitsmedium vorgesehen ist.

2. Strömungsmaschine nach Anspruch 1,
**dadurch gekennzeichnet,**
**dass** in dem Bypasskanal (4) Wärmeübertragungselemente (6), insbesondere Rippen, zum verbesserten Wärmeübertrag an das Gehäuse (2) angeordnet sind.

3. Strömungsmaschine nach Anspruch 1 oder 2,
**dadurch gekennzeichnet,**
**dass** mehrere im Wesentlichen parallel verlaufende Bypasskanäle (4) innerhalb des Gehäuses (2) angeordnet sind.

4. Strömungsmaschine nach einem der Ansprüche 1 bis 3,
**dadurch gekennzeichnet,**
**dass** mindestens ein Bypasskanal (4) dieselben Eigenschaften wie die Strömungsmaschine (1) bezüglich Druckabfall aufweist.

5. Strömungsmaschine nach einem der Ansprüche 1 bis 4,
**dadurch gekennzeichnet,**
**dass** zumindest ein separater und wärmeisolierter Bypasskanal (4') vorgesehen ist.

6. Strömungsmaschine nach einem der Ansprüche 1 bis 5,
**dadurch gekennzeichnet,**
**dass** die Turbine (3) eine axiale Impulsturbine ist.

7. Strömungsmaschine nach einem der Ansprüche 1 bis 5,
**dadurch gekennzeichnet,**
**dass** der wenigstens eine Bypasskanal (4) eingangsseitig an einer ersten Koppelstelle (7) und ausgangsseitig an einer zweiten Koppelstelle (8) mit einer mit der Turbine (3) gekoppelten Leitung (9) verbunden ist, wobei beide Koppelstellen (7,8) innerhalb des Gehäuses (2) angeordnet sind.

8. Strömungsmaschine nach Anspruch 7,
**dadurch gekennzeichnet,**
**dass** an der ersten Koppelstelle (7) eine Ventileinrichtung (11) angeordnet ist, die stellungsabhängig einen Arbeitsmediumstrom auf die Turbine (3) und den wenigstens einen Bypasskanal (4) aufteilt, wobei die Ventileinrichtung (11) ebenfalls innerhalb des Gehäuses (2) angeordnet ist.

9. Brennkraftmaschine (5) mit einem Clausius-Rankine-Kreislauf (12), in welchem eine Strömungsmaschine (1) nach einem der vorhergehenden Ansprüche angeordnet ist.

10. Brennkraftmaschine nach Anspruch 9,
**dadurch gekennzeichnet,**
**dass** in dem Rankine-Kreislauf (12) ein in einen Abgasstrom der Brennkraftmaschine (5) eingebundener Abgaswärmetauscher (10), die Strömungsmaschine (1), ein Kondensator (13), ein Reservoir (15) für das Arbeitsmedium sowie eine Pumpe (14) angeordnet sind.

## Claims

1. A turbomachine (1), comprising a turbine (3) which is arranged in a housing (2) and which can be acted on with a hot working medium,
**characterized in**
**that** at least one bypass channel (4) for heating the housing (2) through the working medium is provided, which bypass channel extends completely within the housing (2) and bypasses the turbine (3).

2. The turbomachine according to claim 1,
**characterized in**
**that** heat transfer elements (6), in particular ribs, for improved heat transfer to the housing (2) are arranged in the bypass channel (4).

3. The turbomachine according to claim 1 or 2,
**characterized in**
**that** a plurality of bypass channels (4) extending substantially parallel are arranged within the housing (2).

4. The turbomachine according to any one of claims 1 to 3,
**characterized in**
**that** at least one bypass channel (4) has the same properties as the turbomachine (1) with regard to pressure drop.

5. The turbomachine according to any one of claims 1 to 4,
**characterized in**
**that** at least one separate and heat-insulated bypass channel (4') is provided.

6. The turbomachine according to anyone of claims 1 to 5,
**characterized in**
**that** the turbine (3) is an axial impulse turbine.

7. The turbomachine according to any one of claims 1 to 5,
**characterized in**
**that** the at least one bypass channel (4) is connected on the inlet side at a first coupling point (7) and on the outlet side at a second coupling point (8) to a line (9) that is coupled to the turbine (3), wherein both coupling points (7, 8) are arranged within the housing (2).

8. The turbomachine according to claim 7,
**characterized in**
**that** at the first coupling point (7) there is arranged a valve device (11) which, depending on the position, divides a working medium flow among the turbine (3) and the at least one bypass channel (4), wherein the valve device (11) is also arranged within the housing (2).

9. An internal combustion engine (5) comprising a Clausius-Rankine cycle (12) in which a turbomachine (1) according to any one of the preceding claims is arranged.

10. The internal combustion engine according to claim 9,
**characterized in**
**that** an exhaust gas heat exchanger (10) integrated in an exhaust gas flow of the internal combustion engine (5), the turbomachine (1), a condenser (13), a reservoir (15) for the working medium and a pump (14) are arranged in the Rankine cycle (12).

## Revendications

1. Turbomachine (1) comportant une turbine (3) disposée dans un logement (2), qui peut être sollicitée avec un fluide de travail chaud, **caractérisée en ce que** au moins un canal de dérivation (4) s'étendant en totalité à l'intérieur du logement (2) et entourant la turbine (3) est prévu afin de chauffer le logement (2) par l'intermédiaire du fluide de travail.

2. Turbomachine selon la revendication 1, **caractérisée en ce que** dans le canal de dérivation (4) des éléments de transmission de chaleur (6), notamment des nervures, sont disposées en vue d'un transfert de chaleur amélioré au logement (2).

3. Turbomachine selon la revendication 1 ou 2, **caractérisée en ce que** plusieurs canaux de dérivation (4) s'étendant essentiellement parallèlement sont disposés à l'intérieur du logement (2).

4. Turbomachine selon une des revendications 1 à 3, **caractérisée en ce que** au moins un canal de dérivation (4) présente les mêmes propriétés que la turbomachine (1) en ce qui concerne la chute de pression.

5. Turbomachine selon une des revendications 1 à 4, **caractérisée en ce que** au moins un canal de dérivation (4') séparé et isolé thermiquement est prévu.

6. Turbomachine selon une des revendications 1 à 5, **caractérisée en ce que** la turbine (3) est une turbine à impulsions axiale.

7. Turbomachine selon une des revendications 1 à 5, **caractérisée en ce que** au moins un canal de dérivation (4) est relié du côté d'entrée à un premier point de couplage (7) et du côté de sortie à un deuxième point de couplage (8) avec une conduite (9) couplée à la turbine (3), dans laquelle les deux points de couplage (7,8) sont disposés à l'intérieur du logement (2).

8. Turbomachine selon la revendication 7, **caractérisée en ce que** au premier point de couplage (7) un dispositif de soupape (11) est disposé, qui divise en fonction de la position un flux de fluide de travail entre la turbine (3) et au moins un canal de dérivation (4), dans laquelle le dispositif de soupape (11) est également disposé à l'intérieur du logement (2).

9. Moteur à combustion interne (5) comportant un circuit Clausius-Rankine (12), dans lequel une turbomachine (1) selon une des revendications précédentes est disposée.

10. Moteur à combustion interne selon la revendication 9, **caractérisé en ce que** dans le circuit de Rankine (12) un échangeur thermique de gaz d'échappement (10) intégré au flux de gaz d'échappement du moteur à combustion interne (5), la turbomachine (1), un condensateur (13), un réservoir (15) pour le fluide de travail ainsi qu'une pompe (14) sont disposés.
